(19) Europäisches Patentamt

European Patent Office

Office européen des brevets

(11) **EP 0 912 785 B1**

(12) **EUROPEAN PATENT SPECIFICATION**

(45) Date of publication and mention
of the grant of the patent:
**07.05.2003 Bulletin 2003/19**

(51) Int Cl.$^7$: **D03D 1/02**, B60R 21/16

(86) International application number:
**PCT/US97/11601**

(21) Application number: **97932459.7**

(22) Date of filing: **27.06.1997**

(87) International publication number:
**WO 98/000592 (08.01.1998 Gazette 1998/01)**

(54) **LOW PERMEABILITY AIRBAG FABRIC**

AIRBAG-GEWEBE MIT GERINGER LUFTDURCHLÄSSIGKEIT

TOILE A FAIBLE PERMEABILITE POUR SAC GONFLABLE

(84) Designated Contracting States:
**AT BE CH DE DK ES FI FR GB GR IE IT LI LU MC NL PT SE**
Designated Extension States:
**AL LT LV RO SI**

(30) Priority: **02.07.1996 US 677433**

(43) Date of publication of application:
**06.05.1999 Bulletin 1999/18**

(73) Proprietor: **Milliken & Company**
**Spartanburg, SC 29304 (US)**

(72) Inventors:
• **BOWEN, Derek, L.**
  **LaGrange, GA 30240 (US)**
• **BOWER, Charles, L.**
  **LaGrange, GA 30240 (US)**

(74) Representative: **HOFFMANN - EITLE**
**Patent- und Rechtsanwälte**
**Arabellastrasse 4**
**81925 München (DE)**

(56) References cited:
**EP-A- 0 436 950**          **EP-A- 0 523 546**
**EP-A- 0 636 721**          **WO-A-96/05985**
**US-A- 4 408 073**

EP 0 912 785 B1

## Description

### Tehchnical Field

The present invention relates generally to the construction of fabrics for use in airbag applications within a restraining system for protection of vehicle occupants during collisions and more particularly to a process for the manufacture of fabrics and airbags formed therefrom having low air permeability characteristics achievable without the need for calendering or other physical deformation processes.

### Background Art

For many uses of industrial fabrics, it is critical for such fabrics to possess a controlled and limited air permeability. This is particularly true of fabrics for use in airbags since permeability affects the ability of the bag to inflate in a controlled and consistent manner according to a given design, so as to ensure the effectiveness of the system during a collision event.

Airbag equipment installed on a fixed portion of an automobile, airplane or other passenger vehicle in opposed relation to an occupant therein plays an important roll in the protection against injury to that occupant which may arise due to a collision with a fixed portion of the vehicle body during an accident. As will be appreciated, airbags may be produced in a number of manners and from a number of different materials. However, airbags are typically formed, at least in part, from some type of woven textile material. Such textile materials are disclosed for example in U.S. Patent Numbers 5,508,073 to Krummheuer et al. issued April 16, 1996; 5,503,197 to Bower et al. issued April 2, 1996; 5,356,680 to Krummheuer et al. issued October 18, 1994; 5,421,378 to Bower et al. issued March 30, 1994; 5,277,230 to Sollars, Jr. issued January 11, 1994; 5,259,645 to Hirabayashi et al. issued November 9, 1993; 5,110,666 to Menzel, et al. issued May 5, 1992; 5,093,163 to Krummheauer, et al. issued March 1992; 5,073,418 to Thomton et al. issued December 17, 1991; 5,011,183 to Thornton et al. issued April 30, 1991; 4,977,016 to Thornton et al. issued December 11, 1990; 4,921,735 to Bloch issued May 1, 1990; and 3,814,141 to Iribe et al. issued June 4, 1974, to which the skilled reader is referred for details on the forming process and the materials.

As will be appreciated, very low air permeabilities may be achieved through the use of coatings applied to a fabric construction. However, the use of such coatings presents a disadvantage from both an economic as well as a functional standpoint. Specifically, the use of coatings may add substantial cost to the finished product while at the same time adding bulk to the finished product which translates to a greater folded volume of the final airbag configuration thereby requiring a greater allocation of space within the vehicle deployment system.

In the attempt to avoid the use of coatings while at the same achieving low and controlled air permeabilities, a number of approaches have been taken. The above-referenced U.S. patents to Thornton et al. and Bloch propose the achievement of low permeability characteristics through the use of mechanical deformation processes, in particular calendering, to close the voids at the interstices between overlapping yarns in the fabric so as to reduce permeability to a desired level. While such calendering operations may reduce permeability, this operation may also have the affect of increasing cost while yielding undesirable changes to the flexibility and feel of the fabrics.

In another approach, fabrics have been produced using very tight weave constructions thereby packing the yarns so tightly together that permeability is reduced to a desired level. In some instances, it is necessary to achieve permeabilities in the range of about 3 liters/dm$^2$/min (1 cubic foot per minute per square foot) of fabric or less as measured at a pressure differential of 125 Pa (0.5 inches of water) in order to meet certain automotive specifications. In order to achieve such levels through tight weave constructions, it has generally been thought necessary to pack the yarns at a density to achieve a fabric cover factor of greater than 0.85. One such known construction is a 467 dtex (420 denier) nylon fabric having 22 threads per cm (57 threads per inch) in the warp and 21 threads per cm (53 threads per inch) in the fill sold under the trade designation MICROPERM™ by Milliken & Company in LaGrange, Georgia.

An alternative approach to achieving low and controlled air permeabilities is taught in EP 0 436 950 A2 where an uncoated fabric with a low permeability to air is disclosed. In particular, polyamide filament yarns with a substantially dense fabric structure are subjected to a temperature which leads to shrinkage and a resultant increase in the density of the fabric, and thus substantial closure of the pores of the fabric. One of the disclosed examples mentions an air permeability of 8 liters/dm$^2$/min at a pressure drop of 500 Pa. The finished nylon fabric of this example has a yarn titer of 470, 21 threads per cm of warp and 20.4 threads per cm of fill. Other examples are of tighter weave.

Further, EP 0 636 721 A2 discloses a woven fabric which has an adjusted air permeability, wherein synthetic fibers which are incorporated into the fabric are induced to shrink, this resulting in the woven fabric having a specific air permeability.

Meanwhile, International Patent Application WO 96/05985 A1 relates to an uncoated airbag fabric wherein a polyamide filament is incorporated into the fabric weave, such that when the fabric is exposed to a raised temperature, there is effected shrinkage of the fabric, this in turn affecting the permeability of the fabric

As will be appreciated by those of skill in the art, the term "fabric cover factor" is used to define the packing factor of yarns in a fabric construction in relation to the maximum number of threads which can lay side by side. The maximum number of threads per 2.54 centimeters (inch) is defined by the following formula:

1. Maximum threads 2.54 centimeters (inch) = (fiber specific cover factor) X

(the square root of the cotton count).

Cotton count is defined by the formula:

2. Cotton count = 5315/denier.

The fiber specific cover factors have been determined over the years by researchers. By way of example, the generally accepted cover factor for nylon is 24.4.

As will be appreciated, by using formulas 1 and 2 above, one can readily determine the maximum number of threads per 2.54 centimeters (inch) which could be placed side by side for a given denier and fiber type. One can then determine a relative cover factor based on the actual weave density in a given fabric by the following relations:

3. Warp cover factor = threads per 2.54 centimeters (inch) in the warp divided by maximum threads per 2.54 centimeters (inch).

4. Fill cover factor = threads per 2.54 centimeters (inch) in the fill divided by maximum threads per 2.54 centimeters (inch).

5. Fabric cover factor = (warp cover factor + fill cover factor) - (warp cover factor x fill cover factor).

By way of illustration, a 467 dtex (420 denier) nylon fabric as described above having 22 threads per cm (57 threads per inch) in the warp and 21 threads per cm (53 threads per inch) in the fill has a warp cover factor of 0.66, a fill cover factor of 0.61 and a fabric cover factor of 0.866. The fabric cover factor of the above-mentioned example of EP 0 436 950 A2 is 0.846.

While low permeability fabrics having cover factors greater than 0.85 have been available, the formation thereof has required a relatively high number of threads per inch which necessarily increases the raw material costs. Moreover, it is generally understood that in order to achieve such very high cover factors, weaving must be carried out by mechanical (i.e. Rapier) weaving processes rather than by water-jet insertion or other means which are substantially faster and less expensive.

## Disclosure of Invention

Notwithstanding the achievements which have been made in reducing air permeability to this point, it is an object of the present invention to provide fabrics of low permeabilites achieved without the need for expensive and complex calendering operations or high cover factor configurations. These would represent a desirable and useful advancement over the present art.

This object is solved by a process having the features of claim 1. Further advantageous embodiments are defined in the dependent claims.

The process of the present invention may be carried out on efficient water-jet weaving machines,due to the relatively low cover factor requirement and the resulting fabrics exhibit desirable low permeability characteristics without requiring the need for complex coatings of calendering operations and thereby represent a useful advancement over the present art.

## Description of Preferred Embodiments

The process of the present invention is preferably carried out with water-jet weaving operations as illustrated and described in U.S. Patent 5,503,197 to Bower et al., to the teachings of which the skilled reader is referred for details. In the preferred practice, the weaving operation will be carried out using nonsized polyamide filament yarns in both the warp and the fill directions. By the term "nonsized" is meant that no chemical sizing compound such as polyacrylic acid, polyvinyl alcohol, polystyrene, polyacetates, starch, gelatin, oil or wax is applied to enhance coherency to the filaments. A particularly preferred polyamide fiber is nylon 6.6. While polyamide filament yarns may be preferred, it is contemplated that other synthetic fibers such as polyester and the like may also be used.

In order to achieve balanced permeability and performance characteristics, the fabrics are preferably woven with a substantially symmetrical weave construction such as a plain weave or basket weave as are well known to those of skill in the art. In one potentially preferred configuration, the fabric is woven with a loom state weave density of approximately 16 threads per centimeter (41 threads per inch) in the warp direction and 16 threads per cm (41 threads per inch) in the fill direction using yarn having a linear density of approximately 700 dtex (630 denier). Such fabric will thereafter be finished in accordance with the washing and drying processes as described below to yield a final configuration of about 16 threads per cm (42 threads per inch) in the warp direction by 16 threads per cm (42 threads per inch) in the fill direction thereby having a fabric cover factor of 0.83.

In another potentially preferred configuration, a filament yarn having a linear density of approximately 460 dtex (420 denier) is woven in a substantially symmetrical plain weave configuration to yield a loom state weave density of approximately 20 threads per cm (50 threads per inch) in the warp direction by 20 threads per cm (50 threads per inch) in the fill direction. Subsequent to washing and drying, such fabric will thereafter have a weave density of approximately 20 threads per cm (51 threads per inch) in the warp direction and 20 threads per cm (51 threads per inch) in the fill direction thereby having a fabric cover factor of 0.83.

In a third potentially preferred configuration, polyamide filament yarn having a linear density of approximately 930 dtex (840 denier) is woven in a substantially symmetrical plain weave configuration to yield a loom state fabric having a weave density of approximately 14 threads per cm (35 threads per inch) in the warp direction and 14 threads per cm (34 threads per inch) in the fill direction. Subsequent to finishing as described below, the finished fabric construction will be about 14 threads per cm (36 threads per inch) in the warp direction by 13 threads per cm (35 threads per inch) in the fill direction thereby having a fabric cover factor of 0.82.

Another potentially preferred embodiment of the fabric is a symmetrical plain weave 350 dtex (315 denier) nylon fabric having a weave density of 23 threads per cm (60 threads per inch) in the warp direction and 23 threads per cm (60 threads per inch) in the fill direction thereby having a fabric cover factor of 0.84.

Yet another potentially preferred embodiment of the fabric is a plain weave formed from 230 dtex (210 denier) nylon at a weave density of 28 threads per cm (72 threads per inch) in the warp direction and 28 threads per cm (72 threads per inch) in the fill direction thereby having a fabric cover factor of 0.83.

As previously stated, the potentially preferred embodiment of the fabric is formed from "nonsized" polyamide filament yarn. Such yarn is preferably a single ply yarn having a relatively high number of individual low denier filaments. In the potentially preferred configuration such filaments have linear densities of about 6.7 dtex (6 denier) per filament or less and more preferably linear densities of about 3.3 dtex (3 denier) per filament or less.

While the above configurations may represent the most preferred embodiments, by way of example only and not limitation, other potentially desirable weave configurations and cover factors are as set forth in TABLE 1.

TABLE I

| No. | Finished Weave Configuration (Warp X Fill) Nylon 6.6 | Fabric Cover Factor |
|---|---|---|
| I | 467 dtex (420 denier) 49 X 49 | 0.810 |
| 2 | 467 dtex (420 denier) 53 X 53 | 0.848 |
| 3 | 700 dtex (630 denier) 41 X 41 | 0.822 |
| 4 | 700 dtex (630 denier) 43 X 43 | 0.845 |
| 5 | 933 dtex (840 denier) 32 X 32 | 0.711 |
| 6 | 933 dtex (840 denier) 33 X 33 | 0.786 |
| 7 | 933 dtex (840 denier) 34 X 34 | 0.801 |
| 8 | 933 dtex (840 denier) 35 X 35 | 0.815 |
| 9 | 933 dtex (840 denier) 36 X 36 | 0.829 |

In the above table, examples no. 2 and 4 are not part of the invention in accordance with claim 1.

Following weaving, the fabric is preferably subjected to treatment in an aqueous bath at a temperature of at least 71°C (160°F) and preferably about 99°C (210°F) or greater so as to promote maximum fabric shrinkage as may be available following loom state formation. In the potentially preferred practice, this washing operation will take place in a series of washbox stations such as are well known to those of skill in the art using water with no chemical additives therein. Following the last stage of such washing operation, excess water is preferably removed by means of vacuums, nip rollers or the like as are well known to those in the art.

Following the washing operation, the fabric according to the invention is subjected to a relatively low temperature drying operation. In the preferred practice, the fabric is first subjected to a predrying operation carried out at a temperature of about 77°C (170°F). Such predrying takes place in a zone along the finishing line about 9 meters (10 yards) in length with the fabric traveling at approximately 32 meters (35 yards) per minute such that the predrying operation is completed in about 17 seconds. Subsequent to this predrying operation, the fabric is thereafter preferably subjected to a low temperature drying operation carried out at a temperature which is just sufficient to drive off remaining moisture without substantially altering the packing and yarn bulk characteristics achieved in the previous weaving and washing operations. In the preferred practice, the fabric will be dried at a temperature of about 121°C (250°F) or less for a period of about 40 seconds. In a more preferred practice, the fabric will be dried at a temperature of about 99°C (210°C) or less for a period of 46 seconds and in a potentially most preferred practice, the fabric will be dried at a temperature of about 77°C (170°F) or less for a period of 56 seconds. All drying operations are preferably carried out on a tenter. On leaving the tenter, the fabric is cooled down gradually to room temperature.

In order to more fully illustrate the concept of the subject invention, the following examples are provided. However, it is to be understood that such examples are not to be construed as unduly limiting the scope of the invention since modifications may be made and other embodiments of the principles of the invention will no doubt occur to those skilled in the art to which the invention pertains.

EXAMPLE 1

A 700 dtex (630 denier) single ply nonsized polyamide filament yarn with 105 filaments per yarn was woven in plain weave on a water-jet loom at a loom state weave density of 16 threads per cm (41 threads per inch) in the warp (plus or minus 1 thread per cm (1 thread per inch)) and 16 threads per cm (41 threads per inch) in the fill (plus or minus 1.3 threads per cm (0.5 threads per inch)). The thickness of the fabric formed was 15 mils (plus or minus 3 mils). The weight of the loom state fabric was 200 g per 91 cm$^2$ (7.05 ounces per square yard) (plus or minus 28 g per 91 cm$^2$ (0.10 ounces per square yard)).

The loom state fabric was thereafter passed through six high temperature water wash boxes at a rate of 32 meters (35 yards) per minute such that a residence time in each box of approximately 64 seconds was achieved. The water temperature in each box was 99°C (210°F) (plus or minus 5°C (5°F)). No scouring chemicals were present in any wash box. A vacuum was used in the final wash box at a level of 15 cm (6 inches) Hg to remove excess water.

The fabric produced was thereafter passed through a nip roll to force out entrained water.

The fabric was thereafter passed through a predryer at a temperature of 79°C (175°F) (plus or minus 5°C (5°F)) with a residence time of approximately 17 seconds.

The fabric was thereafter passed through a six zone tenter at a rate such that a residence time of approximately 9 second was achieved in each zone. In the first two zones, the temperature was set at 74°C (165°F) (plus or minus 5°C (5°F)). In the four subsequent zones the temperature was set at 71°C (160°F) (plus or minus 5°C (5°F)).

The fabric was thereafter cooled gradually to room temperature.

The fabric manufactured had a finished weave density of 16 X 16 (42 X 42) and exhibited an air permeability of 1.05 litre/dm$^2$/min (0.35 cubic feet per minute per square foot) of fabric at a test pressure differential of 125 Pa (0.5 inches of water).

EXAMPLE 2

Example 1 was repeated in all respects except that the yarn had a filament count of 210 filaments per yarn (i.e. 3.3 dtex (3 denier) per filament).

The finished fabric thus manufactured exhibited an air permeability of 0.45 liter/dm$^2$/min (0.15 cubic feet per minute per square foot) of fabric at a test pressure differential of 125 Pa (0.5 inches of water).

**Claims**

1. A process for the manufacture of an airbag fabric having a permeability of not greater than about 2.4 liters of air/dm$^2$ of fabric/min (0.8 cubic feet of air per minute per square foot of fabric) at a pressure differential of 125 Pascals (0.5 inches of water), prior to any coating or calendering operation, the process comprising the steps of:

(a) conveying a plurality of warp yarns substantially free of chemical sizing compounds thereon through a weaving machine;

(b) inserting a plurality of fill yarns substantially free of chemical sizing compounds thereon between said plurality of warp yarns by means of a water jet such that any yarn oils are at least partially removed by said water jet;

(c) beating said plurality of fill yarns into place between said warp yarns such that a loom state fabric is formed;

(d) washing the loom state fabric in a bath at a temperature of about 71°C (about 160°F) to about boiling;

(e) extracting excess liquid from the fabric washed in step "d"; and

(f) drying the fabric washed in step "d" at a temperature of about 121°C (about 250°F) or less such that the finished fabric has a fabric cover factor of not greater than 0.85.

2. The process as in claim 1, wherein each yarn is a synthetic polyamide filament yarn.

3. The process as in claim 2, wherein said filament yarn comprises a plurality of filaments having a linear density of about 6.67 dtex (6 denier) per filament or less, preferably 3.3 dtex (3 denier) per filament or less.

4. The process as in claim 3, wherein said multifilament synthetic yarn has a yarn linear density of about 222 dtex (200 denier) to about 1000 dtex (900 denier).

5. The process as in any of the preceding claims, wherein said fabric cover factor is not greater than 0.83, preferably not greater than 0.82, most preferred not greater than 0.81.

6. The process as in claim 1, wherein said permeability is not greater than 2.1 liters of air/dm$^2$ of fabric /min (0.7 cubic feet of air per minute per square foot of fabric) at a pressure drop of 125 Pascals (0.5 inches of water), preferably not greater than 1.8 liters of air/dm$^2$ of fabric /min (0.6 cubic feet of air per minute per square foot of fabric) at a pressure drop of 125 Pascals (0.5 inches of water), most preferred not greater than 1.5 liters of air/dm$^2$ of fabric /min (0.5 cubic feet of air per minute per square foot of fabric) at a pressure drop of 125 Pascals (0.5 inches of water).

**Patentansprüche**

1. Verfahren zum Herstellen eines Airbagtuchs mit einer Durchlässigkeit von nicht größer als ungefähr 2,4 Litern Luft/dm$^2$ Tuch/Minute (0,8 Kubikfuß Luft pro Minute pro Quadratfuß Tuch) bei einem Druckunterschied von 125 Pascal (0,5 Zoll Wassersäule) vor jeglichem Beschichtungs- oder Kalandervorgang, wobei das Verfahren folgende Schritte umfasst:

(a) Fördern einer Vielzahl Kettgarne durch eine Webmaschine, wobei die Kettgarne im Wesentlichen frei von chemischen Schlichtverbindungen auf ihnen sind;

(b) Einführen einer Vielzahl Schussgarne zwischen die Vielzahl Kettgarne mittels eines Wasserstrahls derart, dass durch den Wasserstrahl jegliche Garnöle zumindest teilweise entfernt werden, wobei die Schussgarne im Wesentlichen frei von chemischen Schlichtverbindungen auf ihnen sind;

(c) Einschlagen der Vielzahl Schussgarne zwischen die Kettgarne an Ort und Stelle, so dass eine Stuhlware gebildet wird;

(d) Waschen der Stuhlware in einem Bad bei einer Temperatur von ungefähr 71°C (ungefähr 160°F) bis ungefähr zum Sieden;

(e) Extrahieren von Überschussflüssigkeit aus der in Schritt "d" gewaschenen Ware; und

(f) Trocknen der in Schritt "d" gewaschenen Ware bei einer Temperatur von ungefähr 121°C (ungefähr 250°F) oder niedriger derart, dass die Fertigware einen Warenabdeckfaktor von nicht größer als 0,85 aufweist.

2. Verfahren nach Anspruch 1, **dadurch gekennzeichnet, dass** jedes Garn ein Synthetikpolyamidfadengarn ist.

3. Verfahren nach Anspruch 2, **dadurch gekennzeichnet, dass** das Fadengarn eine Vielzahl von Fäden mit einer linearen Dichte von ungefähr 6,67 dtex (6 Denier) pro Faden oder niedriger, bevorzugt 3,3 dtex (3 Denier) pro Faden oder niedriger aufweist.

**4.** Verfahren nach Anspruch 3, **dadurch gekennzeichnet, dass** das synthetische Multifadengarn eine lineare Garndichte von ungefähr 222 dtex (200 Denier) bis ungefähr 1000 dtex (900 Denier) aufweist.

**5.** Verfahren nach einem der vorhergehenden Ansprüche, **dadurch gekennzeichnet, dass** der Warenabdeckfaktor nicht größer als 0,83, bevorzugt nicht größer als 0,82, am meisten bevorzugt nicht größer als 0,81 ist.

**6.** Verfahren nach Anspruch 1, **dadurch gekennzeichnet, dass** die Permeabilität nicht größer als 2,1 Liter Luft/dm$^2$ Tuch/Minute (0,7 Kubikfuß Luft pro Minute pro Quadratfuß Tuch) bei einem Druckabfall von 125 Pascal (0,5 Zoll Wassersäule), bevorzugt nicht größer als 1,8 Liter Luft/dm$^2$ Tuch/Minute (0,6 Kubikfuß Luft pro Minute pro Quadratfuß Tuch) bei einem Druckabfall von 125 Pascal (0,5 Zoll Wassersäule), am meisten bevorzugt nicht größer als 1,5 Liter Luft/dm$^2$ Tuch/Minute (0,5 Kubikfuß Luft pro Minute pro Quadratfuß Tuch) bei einem Druckabfall von 125 Pascal (0,5 Zoll Wassersäule) ist.

**Revendications**

**1.** Procédé de fabrication d'une étoffe pour sac gonflable, ayant une perméabilité qui ne dépasse pas 2,4 litres d'air par décimètre carré d'étoffe et par minute environ (0,8 pied cubique d'air par minute et par pied carré d'étoffe) pour une différence de pression de 125 Pa (0,5 pouce d'eau) avant toute opération de revêtement ou de calandrage, le procédé comprenant les étapes suivantes :

(a) le transport de fils de chaîne pratiquement dépourvus de composés chimiques d'encollage dans un métier à tisser,
(b) l'insertion de plusieurs fils de trame pratiquement dépourvus de composés chimiques d'encollage entre plusieurs fils de chaîne à l'aide d'un jet d'eau tel que les huiles des fils éventuels sont au moins partiellement chassées par le jet d'eau,
(c) le battage des fils de trame en position entre les fils de chaîne afin qu'une étoffe tombée de métier soit formée,
(d) le lavage de l'étoffe tombée de métier dans un bain à une température d'environ 71 °C (environ 160 °F) jusqu'à l'ébullition environ,
(e) l'extraction d'un excès de liquide de l'étoffe lavée dans l'étape (d), et
(f) le séchage de l'étoffe lavée dans l'étape (d) à une température d'environ 121 °C (environ 250 °F) ou moins afin que l'étoffe terminée ait un facteur de couverture d'étoffe qui ne dépasse pas 0,85.

**2.** Procédé selon la revendication 1, dans lequel chaque fil est un fil filamenteux de polyamide de synthèse.

**3.** Procédé selon la revendication 2, dans lequel le fil filamenteux comporte plusieurs filaments ayant une densité linéaire d'environ 6,67 dtex (6 deniers) par filament ou moins, et de préférence de 3,3 dtex (3 deniers) par filament ou moins.

**4.** Procédé selon la revendication 3, dans lequel le fil multifilament de synthèse a une densité linéaire de fils d'environ 222 dtex (200 deniers) à environ 1 000 dtex (900 deniers).

**5.** Procédé selon l'une quelconque des revendications précédentes, dans lequel le facteur de couverture de l'étoffe ne dépasse pas 0,83, de préférence ne dépasse pas 0,82, et encore plus avantageusement ne dépasse pas 0,81.

**6.** Procédé selon la revendication 1, dans lequel la perméabilité ne dépasse pas 2,1 litres d'air par décimètre carré d'étoffe et par minute (0,7 pied cubique d'air par minute et par pied carré d'étoffe) pour une différence de pression de 125 Pa (0,5 pouce d'eau), et ne dépasse pas de préférence 1,8 litre d'air par décimètre carré d'étoffe et par minute (0,6 pied cubique d'air par minute et par pied carré d'étoffe) pour une différence de pression de 125 Pa (0,5 pouce), et de manière plus avantageuse ne dépasse pas 1,5 litre d'air par décimètre carré d'étoffe par minute (0,5 pied cubique d'air par minute et par pied carré d'étoffe) pour une différence de pression de 125 Pa (0,5 pouce d'eau).